# EUROPEAN PATENT APPLICATION

(11) **EP 4 539 591 A1**
(43) Date of publication of application: **16.04.2025**
(21) Application number: 22945208.1
(22) Date of filing: 07.06.2022
(51) Int. Cl.: H04W 76/18, H04W 36/00

(54) **FAILURE RECOVERY METHOD AND APPARATUS THEREOF**

(71) Applicant: Beijing Xiaomi Mobile Software Co., Ltd., Beijing 100085 (CN)
(72) Inventor: XIONG, Yi, Beijing 100085 (CN); WU, Yumin, Beijing 100085 (CN)
(74) Representative: Stöckeler, Ferdinand
(86) International application number: PCT/CN2022/097457
(87) International publication number: WO 2023/236061

(57) **Abstract**

Disclosed in the embodiments of the present disclosure are a failure recovery method and an apparatus thereof, which can be applied to the technical field of communications. The method comprises: in response to occurrence of a failure, performing failure recovery on the basis of configuration information for mobility. Therefore, the present disclosure reduces the interruption duration of the change of cell groups, increases the utilization rate of resources, and improves communication efficiency.

## Description

### TECHNICAL FIELD

The disclosure relates to the field of communication technologies, and in particular, to a failure recovery method and apparatus.

### BACKGROUND

Selective activation of cell groups allows for the execution of selective activation configurations even after a cell group change, without the need to reconfigure or reinitialize the corresponding configuration of selective activation of cell groups. At present, in the case where selective activation of cell groups is configured, if a terminal device experiences MCG (Master Cell Group) failure and/or SCG (Secondary Cell Group) failure, there is no mention of how to perform failure recovery methods.

### SUMMARY

Embodiments of the present disclosure provide a failure recovery method and apparatus, which can be applied in the field of communication technology. It can achieve failure recovery based on the configuration information for mobility in response to a terminal device experiencing a failure, when the configuration information for mobility is configured, thereby reducing the interruption duration of cell group changes, improving resource utilization, and enhancing communication efficiency.

In a first aspect, embodiments of the present disclosure provide a failure recovery method. The method is performed by a terminal device, and the method includes: performing failure recovery based on configuration information for mobility in response to occurrence of a failure.

In an implementation, the configuration information for mobility includes at least one of: configuration information for selective activation of cell groups, or configuration information for conditional mobility management.

In an implementation, performing failure recovery based on the configuration information for mobility includes executing a mobility process and/or applying configuration of a target cell group corresponding to the mobility process.

In an implementation, performing failure recovery based on the configuration information for mobility in response to the occurrence of the failure includes: in response to the occurrence of the failure, selecting configuration of a target cell group from the configuration information for mobility; and performing failure recovery based on the configuration of the target cell group.

In an implementation, selecting configuration of a target cell group from the configuration information for mobility in response to the occurrence of the failure includes: in response to the occurrence of the failure, selecting the target cell group from candidate cell groups corresponding to the configuration information for mobility; or, selecting a target cell from cells corresponding to the candidate cell groups, and determining a cell group to which the target cell belongs as the target cell group; and obtaining the configuration of the target cell group from the configuration information for mobility.

In an implementation, selecting configuration of a target cell group from the configuration information for mobility in response to the occurrence of the failure includes:

in response to the occurrence of the failure, selecting the configuration of the target cell group from the configuration information for mobility based on a selection strategy.

In an implementation, in response to the occurrence of the failure, selecting the configuration of the target cell group from the configuration information for mobility based on a selection strategy configured by a network device, includes: in response to the occurrence of the failure, starting a selection timer, and selecting configuration of a candidate cell group from the configuration information for mobility based on a preconfigured selection strategy; and determining selected configuration of the candidate cell group as the configuration of the target cell group in the case that the selection timer does not expire.

In an implementation, the selection strategy includes at least one of following strategies: selecting based on a triggering condition corresponding to a candidate cell group in the configuration information for mobility, selecting based on a measurement result of a candidate cell group in the configuration information for mobility, selecting based on pre-configuration of a network device, selecting based on a protocol specification, and selecting based on implementation of the terminal device.

In an implementation, performing failure recovery based on the configuration information for mobility in response to the occurrence of the failure includes: in response to the occurrence of the failure, selecting a cell for reestablishment; in response to the cell for reestablishment being a cell in one or more candidate cell groups corresponding to the configuration information for mobility, determining a candidate cell group to which the cell for reestablishment belongs as a target cell group; and performing cell group failure recovery based on configuration of the target cell group.

In an implementation, the method further includes: receiving indication information from a network device, wherein the indication information is used to indicate that the terminal device is allowed to perform failure recovery based on the configuration information for mobility.

In an implementation, the indication information is first indication information, wherein the first indication information is used to indicate that the terminal device is allowed to select configuration of a target cell group from the configuration information for mobility; or, the indication information is second indication information, wherein the second indication information is used to indicate that the terminal device is allowed to determine a candidate cell group to which a cell for reestablishment as a target cell group and perform cell group failure recovery based on configuration of the target cell group in the case that the cell for reestablishment is a cell in one or more candidate cell groups corresponding to the configuration information for mobility.

In an implementation, before performing failure recovery based on the configuration information for mobility in response to the occurrence of the failure, the method further includes: determining the occurrence of the failure in response to occurrence of at least one of following failures: master cell group synchronization reconfiguration failure, master cell group radio link failure, secondary cell group synchronization reconfiguration failure, and secondary cell group radio link failure.

In an implementation, the method further includes: in response to a failure in a master cell group or a failure in master cell group failure recovery, entering an idle state, or falling back to configuration of a source master cell group, or triggering a reestablishment process; or, in response to a failure in a secondary cell group or a failure in secondary cell group failure recovery, releasing the secondary cell group, or falling back to configuration of a source secondary cell group, or triggering a reestablishment process.

In a second aspect, embodiments of the present disclosure provide a failure recovery method. The method is performed by a network device. The method includes: sending configuration information for mobility to a terminal device, wherein a failure recovery process of the terminal device is based on the configuration information for mobility.

In an implementation, the configuration information for mobility includes at least one of: configuration information for selective activation of cell groups, or configuration information for conditional mobility management.

In an implementation, the method further includes: configuring a selection strategy for the terminal device, for indicating the terminal device to select configuration of a target cell group from the configuration information for mobility for failure recovery.

In an implementation, the selection strategy includes at least one of following strategies: selecting based on a triggering condition corresponding to a candidate cell group in the configuration information for mobility, selecting based on a measurement result of a candidate cell group in the configuration information for mobility, and selecting based on pre-configuration of the network device.

In an implementation, the method further includes: configuring a selection timer for the terminal device, for indicating the terminal device to select configuration of the target cell group in the case that the selection timer does not expire.

In an implementation, the configuration information for mobility includes configuration of candidate master cell groups, and/or configuration of candidate secondary cell groups; wherein there is no association relationship between the candidate master cell group and the candidate secondary cell group, or there is an association relationship between the candidate master cell group and the candidate secondary cell group.

In an implementation, the method further includes: sending indication information to the terminal device, wherein the indication information is used to indicate that the terminal device is allowed to perform failure recovery based on the configuration information for mobility.

In an implementation, the indication information is first indication information, wherein the first indication information is used to indicate that the terminal device is allowed to select configuration of a target cell group from the configuration information for mobility; or, the indication information is second indication information, wherein the second indication information is used to indicate that the terminal device is allowed to determine a candidate cell group to which a cell for reestablishment as a target cell group and perform cell group failure recovery based on configuration of the target cell group in the case that the cell for reestablishment is a cell in one or more candidate cell groups corresponding to the configuration information for mobility.

In a third aspect, embodiments of the present disclosure provide a failure recovery apparatus, applied in a terminal device. The apparatus includes: a processing unit, configured to perform failure recovery based on configuration information for mobility in response to occurrence of a failure.

In a fourth aspect, embodiments of the present disclosure provide a failure recovery apparatus, applied in a network device. The apparatus includes: a transceiver unit, configured to send configuration information for mobility to a terminal device, wherein a failure recovery process of the terminal device is based on the configuration information for mobility.

In a fifth aspect, embodiments of the present disclosure provide a communication device. The communication device includes a processor and a memory. The memory is stored with a computer program. The processor is configured to execute the computer program stored in the memory, so as to cause the device to implement the method described in the first aspect.

In a sixth aspect, embodiments of the present disclosure provide another communication device. The communication device includes a processor and a memory. The memory is stored with a computer program. The processor is configured to execute the computer program stored in the memory, so as to cause the device to implement the method described in the second aspect.

In a seventh aspect, embodiments of the present disclosure provide a communication device, including a processor and an interface circuit. The interface circuit is configured to receive code instructions and transmit the code instructions to the processor; and the processor is configured to run the code instructions, to cause the device to implement the method described in the first aspect.

In an eighth aspect, embodiments of the present disclosure provide another communication device, including a processor and an interface circuit. The interface circuit is configured to receive code instructions and transmit the code instructions to the processor; and the processor is configured to run the code instructions, to cause the device to implement the method described in the second aspect.

In a ninth aspect, embodiments of the present disclosure provide a communication system. The system includes the communication device described in the fifth aspect and the communication device described in the sixth aspect, or, the system includes the communication device described in the seventh aspect and the communication device described in the eighth aspect.

In a tenth aspect, embodiments of the present disclosure provide a computer readable storage medium, configured to store instructions used by a terminal device, which when executed, cause the terminal device to implement the method described in the first aspect.

In an eleventh aspect, embodiments of the present disclosure provide another computer readable storage medium, configured to store instructions used by a network device, which when executed, cause the network device to implement the method described in the second aspect.

In a twelfth aspect, the present disclosure further provides a computer program product including a computer program that, when run on a computer, causes the computer to perform the method described in the first aspect.

In a thirteenth aspect, the present disclosure further provides another computer program product including a computer program that, when run on a computer, causes the computer to perform the method described in the second aspect.

In a fourteenth aspect, the present disclosure provides a chip system. The chip system includes at least one processor and an interface for supporting the terminal device to implement the functions involved in the first aspect, such as determining or processing at least one of the data or information involved in the above method. In one possible design, the chip system further includes a memory for storing necessary computer programs and data for the terminal device. This chip system can be composed of chips or include chips and other discrete components.

In a fifteenth aspect, the present disclosure provides a chip system. The chip system includes at least one processor and an interface for supporting the terminal device to implement the functions involved in the second aspect, such as determining or processing at least one of the data or information involved in the above method. In one possible design, the chip system further includes a memory for storing necessary computer programs and data for the terminal device. This chip system can be composed of chips or include chips and other discrete components.

In a sixteenth aspect, the present disclosure provides a computer program which, when run a computer, causes the computer to implement the method described in the first aspect.

In a seventeenth aspect, the present disclosure provides another computer program which, when run a computer, causes the computer to implement the method described in the second aspect.

### BRIEF DESCRIPTION OF THE DRAWINGS

In order to provide a clearer explanation of the technical solution in embodiments of the present disclosure or in the background, the accompanying drawings required for use in the embodiments of the present disclosure or in the background will be described below.
Fig. 1 is a schematic diagram of an architecture of a communication system according to an embodiment of the present disclosure.
Fig. 2 is a schematic diagram of an architecture of EN-DC according to an embodiment of the present disclosure.
Fig. 3 is a schematic diagram of an architecture of NR-DC according to an embodiment of the present disclosure.
Fig. 4 is a schematic diagram of connection between cell groups according to an embodiment of the present disclosure.
Fig. 5 is a schematic flowchart of a failure recovery method according to an embodiment of the present disclosure.
Fig. 6 is a schematic flowchart of another failure recovery method according to an embodiment of the present disclosure.
Fig. 7 is a schematic flowchart of another failure recovery method according to an embodiment of the present disclosure.
Fig. 8 is a schematic flowchart of a failure recovery method according to an embodiment of the present disclosure.
Fig. 9 is a schematic flowchart of another failure recovery method according to an embodiment of the present disclosure.
Fig. 10 is a schematic flowchart of a failure recovery method according to an embodiment of the present disclosure.
Fig. 11 is a schematic flowchart of another failure recovery method according to an embodiment of the present disclosure.
Fig. 12 is a schematic flowchart of another failure recovery method according to an embodiment of the present disclosure.
Fig. 13 is a block diagram of a failure recovery apparatus according to an embodiment of the present disclosure.
Fig. 14 is a block diagram of another failure recovery apparatus according to an embodiment of the present disclosure.
Fig. 15 is a block diagram of a communication device according to an embodiment of the present disclosure.
Fig. 16 is a block diagram of a chip according to an embodiment of the present disclosure.

### DETAILED DESCRIPTION

In order to better understand the failure recovery method and apparatus disclosed in embodiments of the present disclosure, the following first describes the communication system applicable to embodiments of the present disclosure.

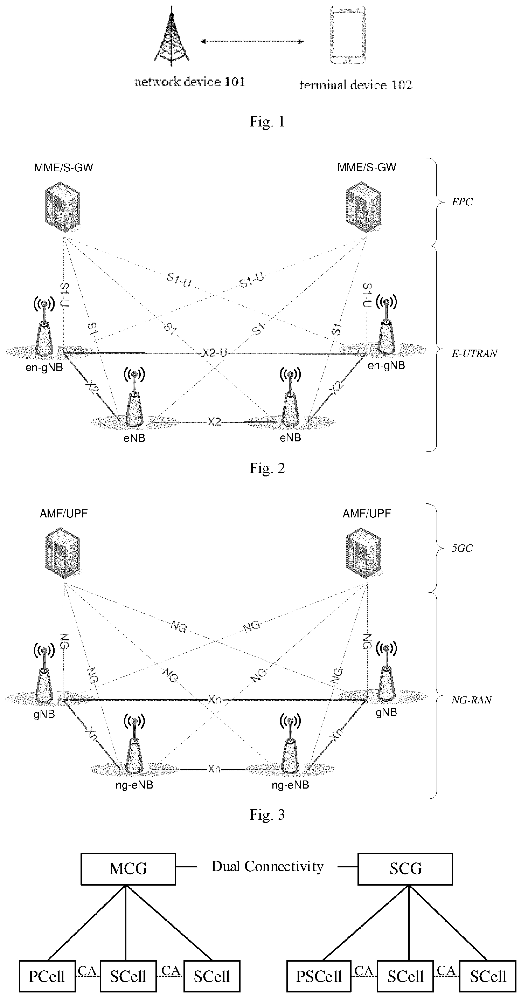

Please refer to Fig. 1, which is a schematic diagram of an architecture of a communication system according to an embodiment of the present disclosure. The communication system may include, but is not limited to, one network device and one terminal device. The number and form of devices shown in Fig. 1 are for example only and do not constitute a limitation on the embodiments of the present disclosure. In practical applications, it may include two or more network devices and two or more terminal devices. The communication system shown in Fig. 1 takes the example of including one network device 101 and one terminal device 102.

It should be noted that the technical solution disclosed in embodiments of the present disclosure can be applied to various communication systems, for example, Long Term Evolution (LTE) systems, 5th generation (5G) mobile communication systems, 5G new radio (NR) systems, or other future new mobile communication systems.

The network device 101 in embodiments of the present disclosure is an entity on the network side used for transmitting or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system. The specific technology and device form adopted by the network device is not limited in embodiments of the present disclosure. The network device provided in embodiments of the present disclosure may be composed of a central unit (CU) and distributed units (DUs), where the CU may also be referred to as a control unit. The CU-DU structure can be used to separate the protocol layers of the network device, such as the base station, with some protocol layer functions centrally controlled by the CU and the remaining or all protocol layer functions distributed in the DUs, which are centrally controlled by the CU.

The terminal device 102 in embodiments of the present disclosure is an entity on the user side used for receiving or transmitting signals, such as a mobile phone. The terminal device may also be referred to as user equipment (UE), mobile station (MS), mobile terminal (MT), etc. The terminal device may be communication enabled car, smart car, mobile phone, wearable device, tablet, computer with wireless transmission and reception capabilities, virtual reality (VR) terminal device, augmented reality (AR) terminal device, wireless terminal device in industrial control, wireless terminal device in self-driving, wireless terminal device in remote medical surgery, wireless terminal device in smart grid, wireless terminal device in transportation safety, wireless terminal device in smart city and wireless terminal device in smart home, etc. The specific technology and device form adopted by the terminal device is not limited in embodiments of the present disclosure.

It can be understood that the communication system described in embodiments of the present disclosure is for a clearer explanation of the technical solution provided in embodiments of the present disclosure, and does not constitute a limitation on the technical solution provided in embodiments of the present disclosure. Those skilled in the art know that with the evolution of system architecture and the emergence of new business scenarios, the technical solution provided in embodiments of the present disclosure is also applicable to similar technical problems.

MR-DC (Multi-Radio Dual Connectivity): MR-DC is a generalized Intra-E-UTRA dual connectivity, in which the terminal device can utilize radio resources provided by two different schedules located on two different NG-RAN (NG Radio Access Network) nodes, through non ideal backhaul connections, one providing NR (New Radio) access and the other providing E-UTRA or NR access. One serves as the MN (Master Node) and the other as the SN (Secondary Node). MN and SN are connected through the network interface, with at least MN connected to the core network.

In MR-DC with EPC, the UTRAN supports MR-DC through E-UTRA-NR DC (EN-DC, Evolved Universal Terrestrial Radio Access and New Radio Dual Connectivity Mode). The EN-DC architecture is shown in Fig. 2, where the terminal device is connected to an eNB acting as MN and an en-gNB acting as SN. The eNB is connected to the EPC through the S1 interface and to the en-gNB through the X2 interface. The en-gNB can also be connected to EPC through S1-U interface, or to other en-gNBs through X2-U interface.

In MR-DC with 5GC,
A) NG-RAN E-UTRA-NR Dual Connectivity (NGEN-DC)
   NG-RAN supports NG-RAN E-UTRA-NR dual connectivity (NGEN-DC), where the terminal device is connected to one ng-eNB as MN and one gNB as SN. The ng-eNB is connected to 5GC, and gNB is connected to ng-eNB through Xn interface.
B) NR-E-UTRA Dual Connectivity (NE-DC)
   NG-RAN supports NR-E-UTRA DC (NE-DC), where the terminal device is connected to a gNB acting as MN and an ng-eNB acting as SN. The gNB is connected to 5GC, and the ng-eNB is connected to gNB through Xn interface.
C) NR-NR Dual Connectivity
   NG-RAN supports NR-NR DC (NR-DC), where the terminal device is connected to one gNB acting as MN and another gNB acting as SN. The main gNB is connected to the 5GC through the NG interface, and two gNBs are connected through the Xn interface. The secondary gNB can also be connected to the 5GC through the NG-U interface. In addition, NR-DC can also be used for the terminal device to access a single gNB, serving as both MN and SN, and configuring MCG and SCG simultaneously. The NR-DC architecture is shown in Fig. 3.

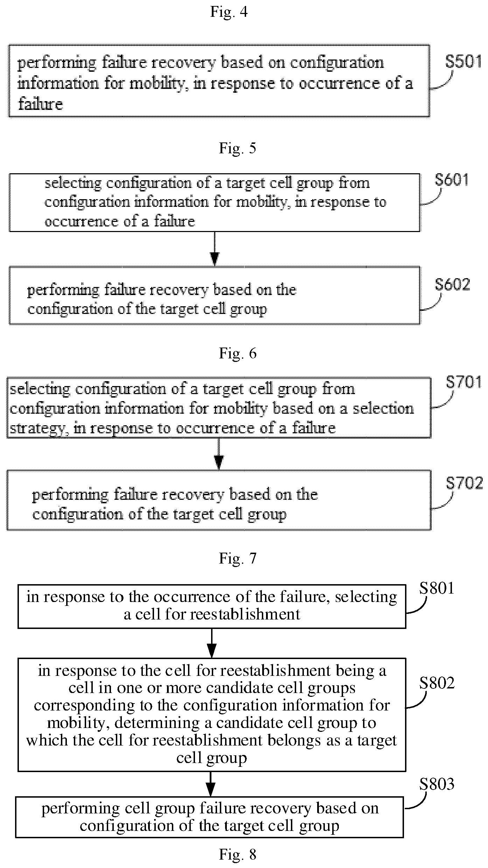

Under dual connectivity, the terminal device can access two cell groups, namely MCG (Master Cell Group) and SCG (Secondary Cell Group). Under MCG, there may be many cells, one of which is used to initiate initial access and is called PCell (Primary Cell). PCell is the most "important" cell in MCG. The PCell under MCG and the SCell (Secondary Cell) under MCG are combined together through Carrier Aggregation (CA). The primary secondary cell in SCG is PSCell and secondary cell in SCG is Scell. Because many signalings are only sent on PCell and PSCell, for ease of description, the protocol also defines a concept called sPCell (special cell), where PCell and PSCell are collectively referred to as sPCell, as shown in Fig. 4.

In Conditional Handover (CHO), Conditional PSCell Addition (CPA), and Conditional PSCell Change (CPC), the terminal device configured with CHO, CPC, and CPA needs to release CHO, CPC, and CPA configurations when completing random access to the target primary cell and target secondary cell. Therefore, if the network device does not reconfigure and reinitialize CHO, CPC, and CPA, the terminal will not have the opportunity to continue executing CHO, CPC, and CPA configurations. This will increase the latency of cell group changes or handovers, and increase signal overhead, especially in FR2 scenarios where cell groups are frequently changed.

Therefore, in the corresponding mobility enhancement project proposal, selective activation of cell groups in MR-DC was proposed, which can enable subsequent configurations to be executed even after the cell group change, without the need to reconfigure or reinitialize the corresponding configuration of selective activation of cell groups. This can reduce signaling overhead and interrupt duration for cell group changes.

In the selective activation of cell groups, the network device can provide configuration information for mobility to the terminal device. The terminal device can select the configuration of the target cell group from the configuration information for mobility, without having to provide the configuration of the cell groups again. In the selective activation of cell groups in R18, after activating a new cell group configuration, the terminal device will not delete the corresponding configuration of selective activation of cell groups.

In selective activation of cell groups, the terminal device can activate or deactivate pre-configured candidate cell groups or cells based on the configuration (such as activation message s) issued by the network device or corresponding activation events, without the need to provide new cell group configurations. Alternatively, in other words, in the selective activation of cell groups, when a new cell or cell group is activated, or after applying a new cell configuration or cell group configuration, or after accessing a new cell or cell group, the terminal device will not delete the corresponding configuration information for selective activation of cell groups.

Selective activation of cell groups is also known as cell group activation. It can enable the execution of corresponding configuration information even after changes to the cell group or cell, without the need for the network to reconfigure or reinitialize configuration information of the corresponding cell group activation. This can reduce signaling overhead and interrupt duration for cell group changes. The configuration information of the cell group activation may include: configuration ID and the configuration of the target cell or the configuration of the target cell group. Optionally, the configuration information of the cell group activation may also include triggering conditions (also known as execution conditions or activation conditions). The network in embodiments of the present disclosure may refer to network devices.

In an embodiment, cell group activation is a mobility management process, including any mobility management process that by configuring cell group activation configuration, the terminal device activates or deactivate the corresponding cell or cell group based on the signaling sent by the network, criteria specified by the protocol, or autonomously, or applies the corresponding cell configuration or cell group configuration or accesses the cell or cell group.

In an embodiment, cell group activation is a mobility management process, including any mobility management process that does not delete or release some or all of the corresponding configuration information after executing the mobility process. Not deleting or releasing the corresponding part or all of the configuration information can also be called retaining the corresponding part or all of the configuration information.

In conditional mobility management, the terminal device implements condition triggered mobility management based on conditions configured by the network and associated candidate cells. After meeting the condition, the terminal device triggers mobility management and access the associated candidate cell. The conditions configured by the network can be specific events based on measurement results, or events based on location or time. The associated candidate cell can be the candidate primary cell and primary secondary cell, corresponding to the corresponding condition triggered mobility management CHO and CPC/CPA, respectively. At present, CHO initiated by MN, CPA/CPC initiated by MN, and CPC initiated by SN are supported. "/" in embodiments of the present disclosure represents "or".

The configurations of CHO and CPA/CPC respectively include corresponding configuration IDs, execution conditions, and configurations of candidate target cells.

However, it is currently not supported to configure both CHO and CPA/CPC simultaneously. In order to improve robustness and reduce the impact on terminal device throughput, CHO and CPC/CPA can be combined, for example, including target MCG and candidate SCG for CPC/CPA in CHO.

The cell group can be one or more of a primary cell group (MCG) and a secondary cell group (SCG). MCG can include one or more of primary cells (PCells) and secondary cells (SCells). SCG can include one or more of primary secondary cells (PSCells) and secondary cells (SCells).

The selective activation of cell groups can include cell selective activation or cell activation, such as one or more of PCell activation, PSCell activation, SCell activation.

It should be noted that in this disclosure, any failure recovery method provided by any embodiment can be executed separately, or combined with possible implementation methods in other embodiments, or can also be executed together with any technical solution in related technologies.

The following provides a detailed introduction to the failure recovery method and apparatus provided in this disclosure, in conjunction with the accompanying drawings.

Please refer to Fig. 5, which is a schematic flowchart of a failure recovery method according to an embodiment of the present disclosure. The method can be performed by the terminal device in Fig. 1.

As shown in Fig. 5, the method may include, but is not limited to following steps.

In step 501, failure recovery is performed based on configuration information for mobility, in response to occurrence of a failure.

The failure can include a cell group failure, in which the cell group includes cells, that is, the cell group failure can include a cell failure. The cell group can include a master cell group and a secondary cell group. The master cell group can include both primary and secondary cells, while the secondary cell group can include both primary secondary cells and secondary cells. That is, the cell group failure can be a master cell group failure or a secondary cell group failure, and the cell failure can be a primary cell failure in the master cell group or a primary secondary cell failure in the secondary cell group. The cell failure can also be a secondary cell failure, for example, a secondary cell failure in the master cell group, or a secondary cell failure in the secondary cell group.

The master cell group can only include the primary cell, and the master cell group failure can be the primary cell failure; the secondary cell group can only include the primary secondary cell, and the secondary cell group failure can be the primary secondary cell failure.

The failure also includes failure to perform failure recovery. In an implementation, when the terminal device fails to recover by reporting failure information, it enters an idle state, or falls back to the configuration of the source master cell group, triggers the reestablishment process, or performs failure recovery based on configuration information for mobility.

The master cell group failure may be synchronization reconfiguration failure or radio link failure of the master cell group. The secondary cell group failure may be synchronization reconfiguration failure or radio link failure of the secondary cell group. The synchronization reconfiguration failure of the secondary cell group, for example, may be secondary cell group addition failure or secondary cell group change failure.

For example, if the terminal device fails to activate MCG and/or SCG, the activation of MCG and/or SCG fails. For example, for MCG activation failure, a synchronous reconfiguration failure corresponding to MCG occurs, or a timer corresponding to MCG activation has timed out. For example, for SCG activation failure, it includes SCG addition failure or SCG change failure, or synchronization reconfiguration failure corresponding to SCG, or timeout of the timer corresponding to SCG activation.

In embodiments of the present disclosure, in some embodiments, before performing failure recovery based on configuration information for mobility in response to the occurrence of failure, the terminal device determines the occurrence of failure in response to occurrence of at least one of following failures, including but not limited to: master cell group synchronization reconfiguration failure, master cell group radio link failure, secondary cell group synchronization reconfiguration failure, and secondary cell group radio link failure.

Taking radio link failure as an example, the terminal experiences MCG radio link failure and/or SCG radio link failure, such as T310 or T312 timeout corresponding to PCell in MCG or PSCell in SCG.

In some embodiments, the occurrence of failure may also include any one or more of the following, and when one or more of the following failures are detected, the terminal device may perform failure recovery based on configuration information for mobility:
detected MCG radio link failure and t316 not configured;
detected radio link failure of MCG and SCG transmission pause;
MCG radio link failure detected during PSCell change or PSCell addition process;
synchronization reconfiguration failure occurred in MCG;
NR mobility failure;
when the integrity check failure indication comes from the lower layer and is related to SRB1 or SRB2, except for detecting integrity check failure in RRC reestablishment messages;
RRC connection reconfiguration failure;
detecting radio link failure of SCG while MCG transmission is suspended;
when MCG transmission is suspended and SCG synchronization failure is reconfigured;
when MCG transmission is suspended, SCG change fails;
SCG configuration failure occurs when MCG transmission is suspended;
when MCG is suspended and integrity check failure indication about SRB3 from lower layers of SCG;
T316 expires.

In some embodiments, the master cell group radio link failure may be that the failure timer corresponding to the primary cell in the master cell group expires. The secondary cell group radio link failure may be that the failure timer corresponding to the primary cell in the secondary cell group expires. The failure timer can be T310 or T312, which means that as long as one timer expires, radio link failure will occur.

In some embodiments, the terminal detecting the radio link failure (RLF) includes but is not limited to any one or more of the following situations. In the first situation, when timer T310 expires in PCell/PSCell, it is determined that RLF has been detected. In the second situation, when timer T312 expires in PCell/PSCell, it is determined that RLF has been detected. In the third situation, when timers T300, T301, T304, T311, and T319 are not running, the MCG MAC sends a random access problem indication; or when SCG RLC indicates that the maximum number of retransmissions has been reached, it is determined that RLF has been detected. In the fourth situation, when the MCG/SCG RLC indicates that the maximum number of retransmissions has been reached, it is determined that RLF has been detected. In the fifth situation, if connected as an IAB node, after receiving the BH RLF indication on the BAP entity from the MCG/SCG, it is determined that RLF has been detected. In the sixth situation, when timer T304 is not running, the MCG MAC sends a consistent uplink LBT failure indication, or SCG MAC sends a consistent uplink LBT failure indication, and it is determined that RLF has been detected.

In embodiments of the present disclosure, the configuration information for mobility includes at least one of: configuration information for selective activation of cell groups, or configuration information for conditional mobility management. Performing failure recovery based on configuration information for mobility includes executing the mobility process and/or applying the configuration of the target cell group corresponding to the mobility process.

The mobility process includes but is not limited to one or more of the following: selective activation of cell groups, and condition triggered mobility management.

As an example, the mobility process involves selective activation of cell groups. When the terminal device performs failure recovery based on the configuration information for mobility, it performs selective activation of cell groups and/or applies the target cell group configuration corresponding to the cell used for failure recovery.

The target cell group configuration can be the configuration information stored by the terminal device, for example, the information stored in the terminal device variable for configuration information of selective activation of cell groups.

For example, the terminal device can store configuration information for selective activation of cell groups corresponding to different candidate cell groups, and the configuration information for selective activation of cell groups corresponding to each candidate cell group includes the configuration of this candidate cell group (which can be represented by an RRC reconfiguration message). When the terminal device selects a certain candidate cell group as the target cell group, the terminal device applies the configuration of this candidate cell group (i.e. the target cell group). If represented by the RRC reconfiguration message, this RRC reconfiguration is applied to perform the corresponding terminal device behavior and attempt to access the target cell group.

As an example, the mobility process is condition triggered mobility management, including one or more of CHO, CPA, CPC. When the terminal device performs failure recovery based on configuration information for mobility, it executes CHO and/or CPC/CPA and/or applies the target cell group configuration corresponding to the cell used for failure recovery.

The target cell group configuration can be a configuration stored by the terminal device, for example, configuration information stored in terminal device variable for CHO/CPC/CPA configurations. For example, this terminal device variable can be VarConditionalConfig, which can contain the configuration of CHO/CPC/CPA for multiple candidate cell groups (or cells), including the configuration of corresponding candidate cell groups. When this candidate cell group is the target cell group corresponding to the cell used for failure recovery, the configuration of this candidate cell group is determined to be the target cell group configuration.

For example, the terminal device can store configuration information for condition triggered mobility management corresponding to different candidate cell groups. The configuration for condition triggered mobility management corresponding to each candidate cell group includes the configuration of this candidate cell group (which can be represented by the RRC reconfiguration message). When the terminal device selects a certain candidate cell group as the target cell group, the terminal device applies the configuration of this candidate cell group (i.e. the target cell group). If represented by the RRC reconfiguration message, this RRC reconfiguration is applied to perform the corresponding terminal device behavior and attempt to access the target cell group. For CHO, CPA, and CPC, the configuration of this candidate cell group can be the configuration in the parameter condReconfigList.

The target cell group refers to the cell group that the terminal device selects to access based on the configuration information for mobility. After determining the target cell group, the terminal device will apply or execute the corresponding configuration. After successfully accessing the target cell group, the target cell group becomes the cell group that the terminal device is currently accessing. The candidate cell group refers to the selectable cell group provided in the configuration information for mobility. When the terminal device selects one of the candidate cell groups based on the configuration information for mobility, the candidate cell group becomes the target cell group.

In embodiments of the present disclosure, the configuration information for mobility can be configured by the network device and stored in variables of the terminal device. That is to say, after receiving a message containing configuration information for mobility sent by the network device, the terminal device can update and store the message in the variable of the terminal device. The configuration information for mobility can be carried in the RRCReconfigured message and sent by the network device to the terminal device.

In an example, the configuration information for mobility may be the mobility configuration stored by the terminal device.

In an example, when the terminal device receives the message for mobility configuration sent by the network device, it stores or updates the stored configuration for mobility based on the message sent by the network device.

In an example, the terminal device utilizes the terminal device variable to store configuration information for mobility. The terminal device variable may be UE variables or Var variable.

In embodiments of the present disclosure, the configuration information for mobility stored by the terminal device may include mobility configuration for candidate master cell groups and/or mobility configuration for candidate secondary cell groups. In embodiments of the present disclosure, in an example, the terminal device, in response to a failure in the master cell group or a failure in the failure recovery of the master cell group, enters an idle state, or falls back to the configuration of the source master cell group, or triggers the reestablishment process. In another example, in response to a failure in the secondary cell or a failure in the failure recovery of the secondary cell group, the secondary cell group is released, or the terminal falls back to the configuration of the source secondary cell group, or triggers the reestablishment process.

For example, in the case where selective activation of cell groups is configured, if the terminal device experiences MCG and/or SCG failure, the methods for failure recovery further include but are not limited to one or more of the following:
for MCG failure, the terminal device can enter into the idle state;
for SCG failure, the terminal device can release SCG;
falling back to the terminal configuration used in the source PCell (MCG failure) or PSCell (SCG failure);
triggering reestablishment, where the terminal device sends a reestablishment request message to the network, requesting to reestablish the RRC connection.

In an implementation, the reason for the reestablishment is: failure to activate the cell group, failure to activate the MCG, failure to activate the SCG, or failure to selectively activate the MCG and SCG.

In an implementation, the reason for the reestablishment may be contained in the reestablishment request message.

For example, if any of the implementation methods for failure recovery in embodiments of the present disclosure fails, the other implementation method in embodiments of the present disclosure can be executed.

Triggering reestablishment refers to that the terminal device sends the reestablishment request message to the network device, requesting to reestablish the RRC connection. The reasons for triggering reestablishment may include at least one of the following reasons: failure of the master cell group, failure of the secondary cell group, failure of the master cell group, failure of the secondary cell group, failure of failure recovery of the master cell group, or failure of failure recovery of the secondary cell group.

With the failure recovery method of embodiments of the present disclosure, the terminal device performs failure recovery based on configuration information for mobility in response to the occurrence of failure, thereby reducing the interruption duration of cell group changes, improving resource utilization, and enhancing communication efficiency.

It should be noted that the above possible implementations can be executed separately or combined together, which is not limited in embodiments of the present disclosure.

Please refer to Fig. 6, which is a schematic flowchart of another failure recovery method according to an embodiment of the present disclosure. The method can be performed by the terminal device shown in Fig. 1.

The failure recovery method can be executed separately, or combined with any of the embodiments or possible implementations in this disclosure, or combined with any technical solution in related technologies.

As shown in Fig. 6, the method may include, but it not limited to following steps.

In step 601, configuration of a target cell group is selected from configuration information for mobility, in response to occurrence of a failure.

In embodiments of the present disclosure, in an example, in response to the occurrence of failure, the target cell group is selected from the candidate cell groups corresponding to the configuration information for mobility, and the configuration of the target cell group in the configuration information for mobility is obtained.

In another example, in response to the occurrence of failure, a target cell is selected from the cells corresponding to the candidate cell group, and the cell group to which the target cell belongs is determined as the target cell group; and the configuration of the target cell group in the configuration information for mobility is obtained.

The target cell group is the cell group selected from the candidate cell groups, and can also be referred to as the target candidate cell group. The candidate cell groups are cell groups that do not have failure.

In embodiments of the present disclosure, in an implementation, the configuration information for mobility includes: the configuration of candidate master cell groups, and/or the configuration of candidate secondary cell groups, where there is no association relationship between the candidate master cell group and the candidate secondary cell group. The terminal device can also perform the following process: in response to a failure of the master cell group, selecting the configuration of the candidate master cell group from the configuration information for mobility, and determining it as the configuration of the target cell group; and/or, in response to the failure of the secondary cell group, selecting the configuration of the candidate secondary cell group from the configuration information for mobility, and determining it as the configuration of the target cell group.

In embodiments of the present disclosure, in another implementation, the configuration information for mobility includes: the configuration of candidate master cell groups, and/or the configuration of candidate secondary cell groups, where there is an association relationship between the candidate master cell group and the candidate secondary cell group. The terminal device can also perform the following process: in response to the master cell group failure, releasing the secondary cell group currently accessed by the terminal device, and selecting the configuration of the first candidate master cell group and the configuration of the first candidate secondary cell group from the configuration information for mobility, and determining them as the configuration of the target cell group; where, there is an association relationship between the first candidate master cell group and the first candidate secondary cell group.

In embodiments of the present disclosure, in another implementation, the configuration information for mobility includes: the configuration of candidate master cell groups, and/or the configuration of candidate secondary cell groups, where there is an association relationship between the candidate master cell group and the candidate secondary cell group. The terminal device can also perform the following process: in response to the secondary cell group failure, selecting the configuration of the second candidate secondary cell group from the configuration information for mobility, and determining it as the configuration of the target cell group; where, there is an association relationship between the second candidate secondary cell group and the master cell group currently accessed by the terminal device.

In embodiments of the present disclosure, in another implementation, the configuration information for mobility includes: the configuration of candidate master cell groups, and/or the configuration of candidate secondary cell groups, where there is an association relationship between the candidate master cell group and the candidate secondary cell group. The terminal device can also perform the following process: in response to the master cell group failure and the secondary cell group failure, selecting the configuration of the third candidate master cell group and the configuration of the third candidate secondary cell group from the configuration information for mobility, and determining them as the configuration of the target cell group; where, there is an association relationship between the third candidate master cell group and the third candidate secondary cell group.

For example, if the network is configured with both MCG and SCG selective activation configurations, and the cell group selective activation configurations of MCG and SCG are associated, it includes but is not limited to one or more of the following situations.

If an SCG failure occurs, when the terminal device performs the above failure recovery, the selectable "to be activated SCG" is the SCG associated with the MCG currently accessed by the terminal device.

If an MCG failure occurs, the terminal device can release the source SCG, and when performing failure recovery, select the MCG to be activated and its associated SCG for connection recovery, and apply the corresponding configurations of MCG and SCG. MCG and its associated SCG correspond to the same "cell group configuration" or different "cell group configurations".

If both MCG failure and SCG failure occur, when performing failure recovery, the terminal device selects the MCG to be activated and its associated SCG for connection recovery, and applies the corresponding configurations of MCG and SCG.

In embodiments of the present disclosure, the terminal device starts a selection timer when detecting a failure, and stops the selection timer when selecting the configuration of the target cell group if the selection timer has not expired. In the case of timer timeout, the terminal device can enter idle mode, or fall back to the configuration of the source cell group, or trigger the reestablishment process, or release the secondary cell group.

In step 602, failure recovery is performed based on the configuration of the target cell group.

In embodiments of the present disclosure, the configuration information for mobility includes at least one of : configuration information for selective activation of cell groups, or configuration information for conditional mobility management. Performing failure recovery based on configuration information for mobility includes executing the mobility process and/or applying the configuration of the target cell group corresponding to the mobility process.

With the failure recovery method of embodiments of the present disclosure, in response to the occurrence of failure, the terminal device selects the configuration of the target cell group from the configuration information for mobility, and performs failure recovery based on the configuration of the target cell group, thereby reducing the interruption duration of cell group changes, improving resource utilization, and enhancing communication efficiency.

It should be noted that the above possible implementations can be executed separately or combined together, which is not limited in embodiments of the present disclosure.

Please refer to Fig. 7, which is a schematic diagram of another failure recovery method according to an embodiment of the present disclosure. The method can be performed by the terminal device in Fig. 1.

The failure recovery method can be executed separately, or combined with any of the embodiments or possible implementations in this disclosure, or combined with any technical solution in related technologies.

As shown in Fig. 7, the method may include, but it not limited to following steps.

In step 701, in response to occurrence of a failure, configuration of a target cell group is selected from configuration information for mobility based on a selection strategy.

The selection strategy includes at least one of following strategies: selecting based on a triggering condition corresponding to a candidate cell group in the configuration information for mobility, selecting based on a measurement result of a candidate cell group in the configuration information for mobility, selecting based on pre-configuration of a network device, selecting based on a protocol specification, and selecting based on implementation of the terminal device.

For example, the appropriate "cell groups to be activated" is selected based on network configuration, or may also be based on implementation of the terminal device, or protocol regulations, or the "cell groups to be activated" is selected based on network pre-configuration for cell group activation, or a cell group is randomly selected from the "cell groups to be activated" for activation. The selectable " cell groups to be activated " needs to exclude cells/cell groups that have failed.

In embodiments of the present disclosure, in an implementation, in response to the failure, the terminal device may select the configuration of the candidate cell group with the best measurement result based on the measurement results of the candidate cell groups in the configuration information for mobility, and determine it as the configuration of the target cell group. The measurement result is the measurement result of the cell corresponding to the candidate cell group. The measurement results may include at least one of the following results: RSRP (Reference Signal Received Power), RSRQ (Reference Signal Received Quality), SINR (Signal to Interference plus Noise Ratio).

For example, when MCG failure and/or SCG failure occurs, the cell group selective activation configuration is selected for MCG failure recovery and/or SCG failure recovery, in which the "cell group to be activated" that meets the activation condition, or has the best measurement result, or selected based on implementation is used for failure recovery.

Taking selecting based on the pre-configuration of the network device as an example, the appropriate "cell group to be activated" is selected based on network configuration, the corresponding cell group is activated, and the configuration of the corresponding "cell group to be activated" is applied. In an implementation, if the network configuration is triggering selective activation of cell groups based on events, the "cell group to be activated" that meets the activation condition is selected for failure recovery. In another implementation, the "cell group to be activated" with the best measurement result (measured RSRP/RSRQ/SINR) is selected for failure recovery. The measurement result is the measurement result of PCell or PSCell corresponding to the cell group to be activated.

In embodiments of the present disclosure, in response to the occurrence of failure, a selection timer is initiated and the configuration of candidate cell groups is selected from the configuration information for mobility based on a pre-configured selection strategy. If the timer has not expired, the configuration of the selected candidate cell group will be determined as the configuration of the target cell group. The selection timer is used to limit the time for the terminal device to select the configuration of the target cell group.

For example, when MCG failure and/or SCG failure occurs, the cell group selective activation configuration is selected for MCG failure and/or SCG failure recovery, and a timer is introduced to limit the time for terminal devices to select the "cell group to be activated". If the timer (selection timer) expires, the terminal device will enter an idle state. For example, in an implementation, when the terminal device detects a failure, it starts this timer. In another implementation, the timer is stopped when the terminal device selects the appropriate 'cell group to be activated'. In another implementation, if the timer expires, any of the processing methods in the embodiments of the present disclosure can be executed, or the terminal device enters the idle state or releases the SCG.

In step 702, failure recovery is performed based on the configuration of the target cell group.

With the failure recovery method of this embodiment of the present disclosure, the terminal device, in response to the failure, selects the configuration of the target cell group from the configuration information for mobility based on the selection strategy; and performs the cell group failure recovery based on the configuration of the target cell group, thereby reducing the interruption duration of cell group changes, improving resource utilization, and enhancing communication efficiency.

In embodiments of the present disclosure, the configuration information for mobility includes at least one of: configuration information for selective activation of cell groups, or configuration information for conditional mobility management. Performing failure recovery based on configuration information for mobility includes executing the mobility process and/or applying the configuration of the target cell group corresponding to the mobility process.

It should be noted that the above possible implementation methods can be executed separately or combined together, which is not limited in embodiments of the present disclosure.

Please refer to Fig. 8, which is a schematic flowchart of another failure recovery method according to an embodiment of the present disclosure. The method can be performed by the terminal device in Fig. 1.

The failure recovery method can be executed separately, or combined with any of the embodiments or possible implementations in this disclosure, or combined with any technical solution in related technologies.

As shown in Fig. 8, the method may include, but it not limited to following steps.

In step 801, a cell for reestablishment is selected in response to occurrence of a failure.

In embodiments of the present disclosure, in some embodiments, the failure may include the following failure but is not limited to at least one of following failures: master cell group synchronization reconfiguration failure, master cell group radio link failure, secondary cell group synchronization reconfiguration failure, and secondary cell group radio link failure.

In some embodiments, the occurrence of failure may also include any one or more of the following, and when one or more of the following failures are detected, the terminal device may perform failure recovery based on configuration information for mobility:
detected MCG radio link failure and t316 not configured;
detected radio link failure of MCG and SCG transmission pause;
MCG radio link failure detected during PSCell change or PSCell addition process;
synchronization reconfiguration failure occurred in MCG;
NR mobility failure;
when the integrity check failure indication comes from the lower layer and is related to SRB1 or SRB2, except for detecting integrity check failure in RRC reestablishment messages;
RRC connection reconfiguration failure;
detecting radio link failure of SCG while MCG transmission is suspended;
when MCG transmission is suspended and SCG synchronization failure is reconfigured;
when MCG transmission is suspended, SCG change fails;
SCG configuration failure occurs when MCG transmission is suspended;
when MCG is suspended and integrity check failure indication about SRB3 from lower layers of SCG;
T316 expires.

In an embodiment, the method of selecting the cell for reestablishment is cell selection or cell reselection, and the cell for reestablishment may also be referred to as the selected cell.

In step 802, a candidate cell group to which the cell for reestablishment belongs is determined as the target cell group, in response to the cell for reestablishment being a cell in one or more candidate cell groups corresponding to the configuration information for mobility.

In an embodiment of the present disclosure, the cell in the candidate cell group may be the primary cell in the candidate master cell group or the primary secondary cell in the candidate secondary cell group, and the candidate master cell group or candidate secondary cell group to which the cell for reestablishment belongs is determined as the target cell group.

In embodiments of the present disclosure, in an example, the configuration information for mobility includes: the configuration of candidate master cell groups, and/or the configuration of candidate secondary cell groups, where there is no association relationship between the candidate master cell group and the candidate secondary cell group. The terminal device can also perform the following process: in response to the cell for reestablishment being the cell in the fourth candidate master cell group in the configuration information for mobility, determining the fourth candidate master cell group as the target cell group; and/or in response to the cell for reestablishment being the cell in the fourth candidate secondary cell group in the configuration information for mobility, determining the fourth candidate secondary cell group as the target cell group.

In an embodiment of the present disclosure, in response to the cell used for reestablishment being not a cell in any candidate cell group in the configuration information for mobility, a reestablishment request message is sent to the network device, requesting to reestablish RRC connection with the cell used for reestablishment.

In embodiments of the present disclosure, in another example, the configuration information for mobility includes: the configuration of candidate master cell groups, and/or the configuration of candidate secondary cell groups, where there is an association relationship between the candidate master cell group and the candidate secondary cell group. The terminal device can also perform the following process: in response to the cell for reestablishment being the cell in the fifth candidate master cell group in the configuration information for mobility, releasing the secondary cell group currently accessed by the terminal device, and determining the fifth candidate master cell group and the fifth candidate secondary cell group as the target cell groups, where there is an association relationship between the fifth candidate master cell group and the fifth candidate secondary cell group.

In step 803, cell group failure recovery is performed based on the configuration of the target cell group.

In embodiments of the present disclosure, the terminal device activates the target cell group, and applies the configuration of the target cell group, to perform the cell group failure recovery.

For example, when MCG failure and/or SCG failure occurs, the reestablishment process is used to perform MCG and/or SCG failure recovery through selective activation configuration of cell groups. In an implementation, failure recovery is carried out through the reestablishment process. If the selected cell for reestablishment during the reestablishment process is a cell (PCell or PSCell) from any of the "to be activated cell groups" in the selective activation configuration of cell groups, the terminal device activates this cell group and applies the corresponding configuration of this "to be activated cell group".

For example, if the cell for reestablishment selected by the terminal device through cell selection during the reestablishment process is the PCell corresponding to any "to be activated MCG" in the cell group selective activation configuration, then this "to be activated MCG" is activated and the corresponding configuration of this "to be activated MCG" is applied.

For example, if the cell for reestablishment selected by the terminal device through cell selection during the reestablishment process is the PSCell corresponding to any "to be activated SCG" in the cell group selective activation configuration, then this "to be activated SCG" is activated and the corresponding configuration of this "to be activated SCG" is applied.

In another implementation, the cell for reestablishment selected through cell selection during the reestablishment process does not belong to the cells in the "cell group to be activated", the terminal device sends a reestablishment request message to the network, requesting to reestablish the RRC connection. The reason for setting the reestablishment is: activation failure of the cell group, which is included in the reestablishment request message.

For example, the terminal device receives the configuration information for mobility sent by the network device, where the configuration information for mobility may include configuration information 1 and configuration information 2. The configuration information 1 corresponds to the mater cell group 1 to be activated, and configuration information 2 corresponds to the master cell group 2 to be activated. Based on the configuration information for mobility, the terminal device decides to activate master cell group 1 and apply the configuration of master cell group 1. The terminal device receives configuration information related to MCG activation sent by the network, including activation configuration 1 and activation configuration 2, corresponding to MCG1 and MCG2 to be activated respectively. According to the configuration, the terminal device decides to activate MCG1 and applies the configuration of MCG1.

In some embodiments, in the process of activating master cell group 1, if the activation of master cell group 1 fails, the terminal device can initiate the reestablishment process. A cell is selected through cell selection. If this cell is the target cell corresponding to the configuration of the target cell group in the configuration information for mobility, the reestablishment after failure can be performed based on the configuration of the target cell.

In some embodiments, if the activation of master cell group 1 fails during the activation process, the terminal device can initiate the reestablishment process, and start the selection timer T311. Through cell selection, a cell is selected. If the cell corresponds to the configuration of the target cell group in the configuration information for mobility, the reestablishment after failure is performed based on the configuration of the target cell, and the selection timer T311 is stopped. If timer T311 expires, it will enter an idle state. The start and stop of timer T311 can refer to Table 1 below.

**Table 1**

| timer | Start | Stop | expire |
|---|---|---|---|
| T311 | Upon initiating the RRC connection reestablishment procedure | Upon selection of a suitable NR cell | Enter RRC_IDLE |

For example, in the process of activating MCG1, if activation of MCG1 fails, the terminal device initiates the reestablishment process, starts T311, performs cell selection, selects an appropriate cell, and stops T311.

In an example, if the selected cell is the primary cell in master cell group 2, the master cell group 2 is activated and its configuration information is applied. In another example, if the selected cell is the primary cell in master cell group 1, master cell group 1 is activated and the configuration information of master cell group 1 is applied. That is to say, if the selected cell is the PSCell in MCG2 (or MCG1), MCG2 is activated and the corresponding configuration of MCG2 is applied.

If the selected cell is not the primary cell in master cell group 2 or master cell group 1, the reestablishment process is continued, an RRC reestablishment request message is sent to the network device, requesting the reestablishment of the RRC connection. The reason for the reestablishment is the activation failure of the master cell group, and the cell group which fails is the master cell group 1. That is to say, if the selected cell is not a PSCell in MCG2 and MCG1, the reestablishment process is continued and an RRC reestablishment request message is sent to the network. The reason for reestablishment is MCG activation failure. The cell group which fails is MCG1.

With the failure recovery method of embodiments of the present disclosure, the terminal device selects a cell for reestablishment in response to the occurrence of a failure; determines the candidate cell group to which the cell for reestablishment belongs as the target cell group in response to the cell for reestablishment being the cell in one or more candidate cell groups corresponding to the configuration information for mobility; and performs cell group failure recovery based on the configuration of the target cell group, thereby reducing the interruption duration of cell group changes, improving resource utilization, and enhancing communication efficiency.

It should be noted that the above possible implementations can be executed separately or combined together, which is not limited in embodiments of the present disclosure.

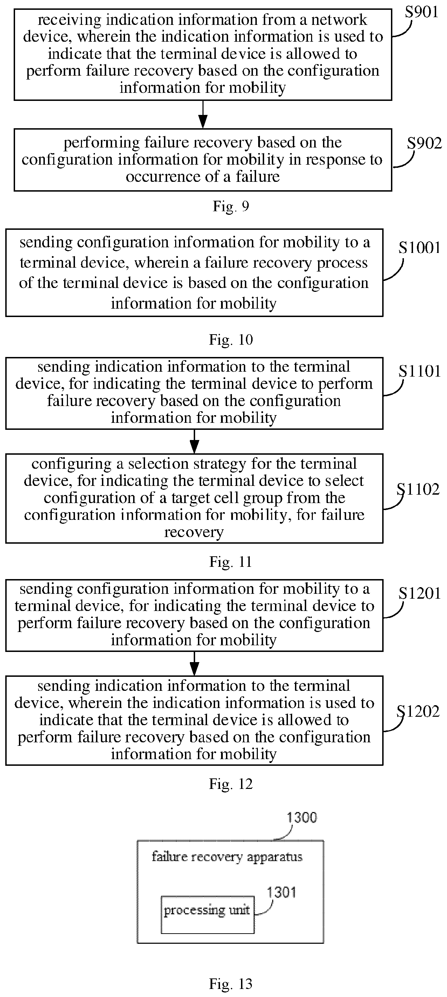

Please refer to Fig. 9, which is a schematic flowchart of another failure recovery method according to an embodiment of the present disclosure. The method can be performed by the terminal device in Fig. 1.

The failure recovery method can be executed separately, or combined with any of the embodiments or possible implementations in this disclosure, or combined with any technical solution in related technologies.

As shown in Fig. 9, the failure recovery method may include, but is not limited to following steps.

In step 901, indication information is received from a network device, wherein the indication information is used to indicate that the terminal device is allowed to perform failure recovery based on configuration information for mobility.

In an embodiment of the present disclosure, the indication information is first indication information, wherein the first indication information is used to indicate that the terminal device is allowed to select configuration of a target cell group from the configuration information for mobility; or, the indication information is second indication information, wherein the second indication information is used to indicate that the terminal device is allowed to determine a candidate cell group to which a cell for reestablishment as a target cell group and perform cell group failure recovery based on configuration of the target cell group in the case that the cell for reestablishment is a cell in one or more candidate cell groups corresponding to the configuration information for mobility.

The indication information may be contained in the configuration information for selective activation of cell groups.

The indication information can also reuse an indication parameter for indicating the use of conditional reconfiguration for failure recovery, which can be attemptCondReconfig.

For example, the network device sends the indication information to the terminal device, informing the terminal device that it can use cell group activation for failure recovery. This indication information can be included in the configuration information for selective activation of cell groups.

In an implementation, taking the first indication information as an example, it indicates that the terminal device can achieve failure recovery by selecting the "cell group to be activated" for cell group activation. In another implementation, taking the second indication information as an example, it indicates that the terminal device can activate the cell group to achieve failure recovery when the selected cell for reestablishment is the "cell group to be activated". For example, the indication information can reuse the attemptCondReconfig parameter for indicating that CHO recovery can be performed.

In step 902, failure recovery is performed based on the configuration information for mobility, in response to occurrence of failure.

The configuration information for mobility includes at least one of: configuration information for selective activation of cell groups, or configuration information for conditional mobility management.

When the indication information is the first indication information, in response to the failure, the terminal device can select the configuration of the target cell group from the configuration information for mobility; and perform failure recovery based on the configuration of the target cell group. When the indication information is the second indication information, in response to the occurrence of a cell group failure, the terminal device can select a cell for reestablishment; determine the candidate cell group to which the cell for reestablishment belongs as the target cell group in response to the cell for reestablishment being the cell in one or more candidate cell groups corresponding to the configuration information for mobility; and perform cell group failure recovery based on the configuration of the target cell group.

In embodiments of the present disclosure, step 902 can be implemented in any of the various manners in embodiments disclosed herein, which is not limited in embodiments of the present disclosure and will not be elaborated.

With the failure recovery method of this embodiment of the present disclosure, in response to the occurrence of failure, the terminal device performs failure recovery based on configuration information for mobility, receives indication information from the network device, wherein the indication information is used to indicate that the terminal device is allowed to perform failure recovery based on the configuration information for mobility, thereby reducing the interruption duration of cell group changes, improving resource utilization, and enhancing transmission efficiency.

It should be noted that the above possible implementations can be executed separately or combined together, which is not limited in embodiments of the present disclosure.

Please refer to Fig. 10, which is a schematic flowchart of a failure recovery method according to an embodiment of the present disclosure. The method can be performed by the network device in Fig. 1.

The failure recovery method can be executed separately, or combined with any of the embodiments or possible implementations in this disclosure, or combined with any technical solution in related technologies.

As shown in Fig. 10, the failure recovery method may include, but is not limited to following steps.

In step 1001, configuration information for mobility is sent to a terminal device, wherein a failure recovery process of the terminal device is based on the configuration information for mobility.

In an embodiment of the present disclosure, the configuration information for mobility includes at least one of: configuration information for selective activation of cell groups, or configuration information for conditional mobility management. Performing failure recovery based on configuration information for mobility includes executing the mobility process and/or applying the configuration of the target cell group corresponding to the mobility process.

The target cell group refers to the cell group selected by the terminal device based on the configuration information for mobility to access. After determining the target cell group, the terminal device will apply or execute the corresponding configuration. After successfully accessing the target cell group, the target cell group becomes the cell group that the terminal device is currently accessing. The candidate cell group refers to the selectable cell group provided in the configuration information for mobility. When the terminal device selects one of the candidate cell groups based on the configuration information for mobility, the candidate cell group becomes the target cell group.

In an embodiment of the present disclosure, the configuration information for mobility can be configured by the network device and stored in variables of the terminal device. That is to say, after receiving a message containing configuration information for mobility sent by the network device, the terminal device can update and store the message in the variable of the terminal device. The configuration information for mobility can be carried in the RRCReconfiguration message and sent by the network device to the terminal device.

In one example, the configuration information for mobility may be the mobility configuration stored by the terminal device.

In one example, when the terminal device receives a message for mobility configuration sent by the network device, it stores or updates the stored configuration for mobility based on the message sent by the network device.

In one example, the terminal device utilizes the terminal variable to store configuration information for mobility, in which the terminal variable can be referred to as UE variable or Var variable.

In an embodiment of the present disclosure, the configuration information for mobility includes: the configuration of candidate master cell groups, and/or the configuration of candidate secondary cell groups; wherein there is no association relationship between the candidate master cell group and the candidate secondary cell group; or, there is an association relationship between the candidate master cell group and the candidate secondary cell group.

With the failure recovery method of embodiments of the present disclosure, the network device sends configuration information for mobility to the terminal device, wherein the failure recovery process of the terminal device is based on the configuration information for mobility, thereby reducing the interruption duration of cell group changes, improving resource utilization, and enhancing communication efficiency.

It should be noted that the above possible implementations can be executed separately or combined together, which is not limited in embodiments of the present disclosure.

Please refer to Fig. 11, which is a schematic flowchart of another failure recovery method according to an embodiment of the present disclosure. The method can be performed by the network device in Fig. 1.

The failure recovery method can be executed separately, or combined with any of the embodiments or possible implementations in this disclosure, or combined with any technical solution in related technologies.

As shown in Fig. 11, the method may include, but it not limited to following steps.

In step 1101, configuration information for mobility is sent to a terminal device, wherein a failure recovery process of the terminal device is based on the configuration information for mobility.

In embodiments of the present disclosure, step 1101 can be implemented in any manner of the various embodiments disclosed herein, which is not limited in embodiments of the present disclosure and will not be elaborated.

In step 1102, a selection strategy is configured for the terminal device, for indicating the terminal device to select configuration of a target cell group from the configuration information for mobility based on the selection strategy, for failure recovery.

The selection strategy includes at least one of following strategies: selecting based on a triggering condition corresponding to a candidate cell group in the configuration information for mobility, selecting based on a measurement result of a candidate cell group in the configuration information for mobility, and selecting based on pre-configuration of the network device.

In embodiments of the present disclosure, in an implementation, in response to a failure, the terminal device may select the configuration of the candidate cell group with the best measurement result based on the measurement results of the candidate cell groups in the configuration information for mobility, and determine it as the configuration of the target cell group. The measurement result is the measurement result of the primary cell or primary secondary cell corresponding to the candidate cell group. The measurement results may include at least one of the following results: RSRP (Reference Signal Received Power), RSRQ (Reference Signal Received Quality), SINR (Signal to Interference plus Noise Ratio).

A selection timer is configured for the terminal device to indicate the terminal device to select the configuration of the target cell group in the case that the selection timer has not expired. That is to say, the selection timer is used to limit the time for the terminal device to select the configuration of the target cell group.

With the failure recovery method of embodiments of the present disclosure, the network device sends configuration information for mobility to the terminal device, wherein the failure recovery process of the terminal device is based on the configuration information for mobility; configures the selection strategy for the terminal device, for indicating the terminal device to select the configuration of the target cell group from the configuration information for mobility based on the selection strategy, for failure recovery, thereby reducing the interruption duration of cell group changes, improving data utilization, and enhancing communication efficiency.

It should be noted that the above possible implementations can be executed separately or combined together, which is not limited in embodiments of the present disclosure.

Please refer to Fig. 12, which is a schematic flowchart of another failure recovery method according to an embodiment of the present disclosure. The method can be performed by the network device in Fig. 1.

The failure recovery method can be executed separately, or combined with any of the embodiments or possible implementations in this disclosure, or combined with any technical solution in related technologies.

As shown in Fig. 12, the method may include, but it not limited to following steps.

In step 1201, configuration information for mobility is sent to a terminal device, wherein a failure recovery process of the terminal device is based on the configuration information for mobility.

In embodiments of the present disclosure, step 1201 can be implemented in any manner of the various embodiments disclosed herein, which is not limited in embodiments of the present disclosure and will not be elaborated.

In step 1202, indication information is sent to the terminal device, wherein the indication information is used to indicate that the terminal device is allowed to perform failure recovery based on the configuration information for mobility.

In an embodiment of the present disclosure, the indication information is first indication information, wherein the first indication information is used to indicate that the terminal device is allowed to select the configuration of the target cell group from the configuration information for mobility; or, the indication information is second indication information, wherein the second indication information is used to indicate that the terminal device is allowed to determine a candidate cell group to which a cell for reestablishment as a target cell group and perform cell group failure recovery based on configuration of the target cell group in the case that the cell for reestablishment is a cell in one or more candidate cell groups corresponding to the configuration information for mobility.

The indication information may be contained in the configuration information for selective activation of cell groups.

The indication information can also reuse an indication parameter for indicating the use of conditional reconfiguration for failure recovery, which can be attemptCondReconfig.

For example, the network device sends the indication information to the terminal device, informing the terminal device that it can use cell group activation for failure recovery. This indication information can be included in the configuration information for selective activation of cell groups.

In an implementation, taking the first indication information as an example, it indicates that the terminal device can achieve failure recovery by selecting the "cell group to be activated" for cell group activation. In another implementation, taking the second indication information as an example, it indicates that the terminal device can activate the cell group to achieve failure recovery when the selected cell for reestablishment is the "cell group to be activated". For example, the indication information can reuse the attemptCondReconfig parameter for indicating that CHO recovery can be performed.

With the failure recovery method of embodiments of the present disclosure, the network device sends configuration information for mobility to the terminal device, wherein the failure recovery process of the terminal device is based on the configuration information for mobility; and send indication information to the terminal device, where the indication information is used to indicate that the terminal device is allowed to perform failure recovery based on the configuration information for mobility, thereby reducing the interruption duration of cell group changes, improving resource utilization, and enhancing communication efficiency.

It should be noted that the above possible implementations can be executed separately or combined together, which is not limited in embodiments of the present disclosure.

In the above embodiments provided in this disclosure, the methods provided in this disclosure are introduced from the perspectives of network device and terminal device, respectively. In order to achieve the various functions in the methods provided in the embodiments of the present disclosure, the network device and the terminal device may include hardware structures and software modules, which can be implemented in the form of hardware structures, software modules, or a combination of hardware structures and software modules. One of the above functions can be executed in the form of hardware structure, software module, or a combination of hardware structure and software module.

Please refer to Fig. 13, which is a block diagram of a failure recovery apparatus 1300 according to an embodiment of the present disclosure. The apparatus is applied in terminal device. The apparatus includes: a processing unit 1301, configured to perform failure recovery based on configuration information for mobility in response to occurrence of a failure.

In an implementation, the configuration information for mobility includes at least one of: configuration information for selective activation of cell groups, or configuration information for conditional mobility management.

In an implementation, performing failure recovery based on the configuration information for mobility includes executing a mobility process and/or applying configuration of a target cell group corresponding to the mobility process.

In an implementation, the processing unit 1301 is further configured to: in response to the occurrence of the failure, select configuration of a target cell group from the configuration information for mobility; and perform failure recovery based on the configuration of the target cell group.

In an implementation, the processing unit 1301 is further configured to: in response to the occurrence of the failure, select the target cell group from candidate cell groups corresponding to the configuration information for mobility; or, select a target cell from cells corresponding to the candidate cell groups, and determine a cell group to which the target cell belongs as the target cell group; and obtain the configuration of the target cell group from the configuration information for mobility.

In an implementation, the processing unit 1301 is further configured to: in response to the occurrence of the failure, select the configuration of the target cell group from the configuration information for mobility based on a selection strategy.

In an implementation, the processing unit 1301 is further configured to: in response to the occurrence of the failure, start a selection timer, and select configuration of a candidate cell group from the configuration information for mobility based on a preconfigured selection strategy; and determine selected configuration of the candidate cell group as the configuration of the target cell group in the case that the selection timer does not expire.

In an implementation, the selection strategy includes at least one of following strategies: selecting based on a triggering condition corresponding to a candidate cell group in the configuration information for mobility, selecting based on a measurement result of a candidate cell group in the configuration information for mobility, selecting based on pre-configuration of a network device, selecting based on a protocol specification, and selecting based on implementation of the terminal device.

In an implementation, the processing unit 1301 is further configured to: in response to the occurrence of the failure, select a cell for reestablishment;

in response to the cell for reestablishment being a cell in one or more candidate cell groups corresponding to the configuration information for mobility, determine a candidate cell group to which the cell for reestablishment belongs as a target cell group; and perform cell group failure recovery based on configuration of the target cell group.

In an implementation, the apparatus further includes: a receiving unit; wherein the receiving unit is configured to receive indication information from a network device, wherein the indication information is used to indicate that the terminal device is allowed to perform failure recovery based on the configuration information for mobility.

In an implementation, the indication information is first indication information, wherein the first indication information is used to indicate that the terminal device is allowed to select the configuration of the target cell group from the configuration information for mobility; or, the indication information is second indication information, wherein the second indication information is used to indicate that the terminal device is allowed to determine a candidate cell group to which a cell for reestablishment as a target cell group and perform cell group failure recovery based on configuration of the target cell group in the case that the cell for reestablishment is a cell in one or more candidate cell groups corresponding to the configuration information for mobility.

In an implementation, the processing unit 1301 is further configured to: determine the occurrence of the failure in response to occurrence of at least one of following failures: master cell group synchronization reconfiguration failure, master cell group radio link failure, secondary cell group synchronization reconfiguration failure, and secondary cell group radio link failure.

In an implementation, the processing unit 1301 is further configured to: in response to a failure in a master cell group or a failure in master cell group failure recovery, enter an idle state, or fall back to configuration of a source master cell group, or trigger a reestablishment process; or, in response to a failure in a secondary cell group or a failure in secondary cell group failure recovery, relea se the secondary cell group, or fall back to configuration of a source secondary cell group, or trigger a reestablishment process.

With the failure recovery apparatus of embodiments of the present disclosure, in response to the failure, the terminal device performs failure recovery based on configuration information for mobility, thereby reducing the interruption duration of cell group changes, improving resource utilization, and enhancing communication efficiency.

It should be noted that the above possible implementations can be executed separately or combined together, which is not limited in embodiments of the present disclosure.

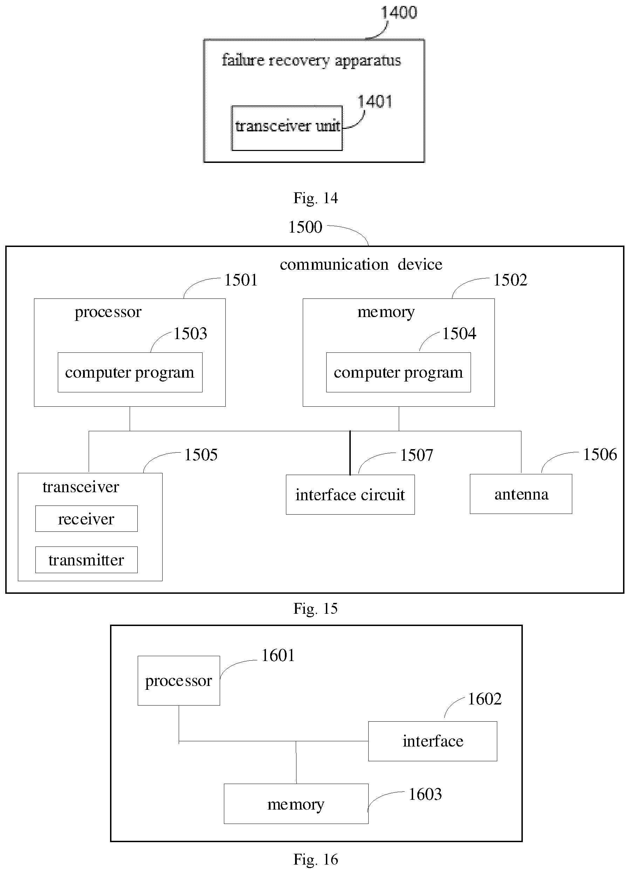

Please refer to Fig. 14, which is a block diagram of another failure recovery apparatus 1400 according to an embodiment of the present disclosure. The apparatus is applied in a network device. The apparatus includes: a transceiver unit 1401, configured to send configuration information for mobility to a terminal device, wherein a failure recovery process of the terminal device is based on the configuration information for mobility.

In an implementation, the configuration information for mobility includes at least one of: configuration information for selective activation of cell groups, or configuration information for conditional mobility management.

In an implementation, the apparatus further includes a processing unit. The processing unit is configured to configure a selection strategy for the terminal device, for indicating the terminal device to select configuration of a target cell group from the configuration information for mobility for failure recovery.

In an implementation, the selection strategy includes at least one of following strategies: selecting based on a triggering condition corresponding to a candidate cell group in the configuration information for mobility, selecting based on a measurement result of a candidate cell group in the configuration information for mobility, and selecting based on pre-configuration of the network device.

In an implementation, the processing unit is further configured to: configure a selection timer for the terminal device, for indicating the terminal device to select configuration of the target cell group in the case that the selection timer does not expire.

In an implementation, the configuration information for mobility includes configuration of candidate master cell groups, and/or configuration of candidate secondary cell groups; wherein there is no association relationship between the candidate master cell group and the candidate secondary cell group, or there is an association relationship between the candidate master cell group and the candidate secondary cell group.

In an implementation, the transceiver unit 1401 is further configured to: send indication information to the terminal device, wherein the indication information is used to indicate that the terminal device is allowed to perform failure recovery based on the configuration information for mobility.

In an implementation, the indication information is first indication information, wherein the first indication information is used to indicate that the terminal device is allowed to select the configuration of the target cell group from the configuration information for mobility; or, the indication information is second indication information, wherein the second indication information is used to indicate that the terminal device is allowed to determine a candidate cell group to which a cell for reestablishment as a target cell group and perform cell group failure recovery based on configuration of the target cell group in the case that the cell for reestablishment is a cell in one or more candidate cell groups corresponding to the configuration information for mobility.

With the failure recovery apparatus of embodiments of the present disclosure, the network device sends configuration information for mobility to the terminal device. The failure recovery process of the terminal device is based on the configuration information for mobility, thereby reducing the interruption duration of cell group changes, improving resource utilization, and enhancing communication efficiency.

It should be noted that the above possible implementations can be executed separately or combined together, which is not limited in embodiments of the present disclosure.

It should be noted that the explanation of the method executed on the terminal device side in any of the embodiments shown in Figures 5 to 9 is also applicable to the failure recovery apparatus 1300 of this embodiment, or the explanation of the method executed on the network device side in any of the embodiments shown in Figures 10 to 12 is also applicable to the failure recovery apparatus 1400 of this embodiment. The implementation principle is similar and will not be repeated here.

Please refer to Fig. 15, which is a schematic diagram of a structure of a communication device 1500 according to an embodiment of the present disclosure. The communication device 1500 may be a network device, or may be a terminal device, or may be a chip, a chip system, or a processor that supports the network device to implement the above methods, or may be aa chip, a chip system, or a processor that supports the terminal device to implement the above methods. This device can be used to implement the methods described in the above method embodiments, which can be referred to in the description of the above method embodiments.

The communication device 1500 may include one or more processors 1501. The processor 1501 may be a general-purpose processor or a dedicated processor, etc. For example, it may be a baseband processor or a central processing unit. The baseband processor can be used to process communication protocols and communication data, while the central processor can be used to control communication devices (such as network side devices, baseband chips, terminal devices, terminal device chips, DU or CU, etc.), execute computer programs, and process data from computer programs.

Optionally, the communication device 1500 may also include one or more memories 1502, on which computer programs 1504 may be stored. The processor 1501 executes the computer programs 1504 to enable the communication device 1500 to perform the methods described in the above method embodiments. Optionally, the memory 1502 may also store data. The communication device 1500 and the memory 1502 can be set separately or integrated together.

Optionally, the communication device 1500 may also include a transceiver 1505 and an antenna 1506. The transceiver 1505 can be referred to as a transceiver unit, transceiver machine, or transceiver circuit, etc., used to achieve transceiver functions. The transceiver 1505 can include a receiver and a transmitter, where the receiver can be referred to as a receiver unit or receiving circuit, etc., used to achieve the receiving function; the transmitter can be referred to as a transmitter unit or a transmission circuit, etc., used to implement the transmission function.

Optionally, the communication device 1500 may also include one or more interface circuits 1507. The interface circuit 1507 is used to receive code instructions and transmit them to the processor 1501. The processor 1501 executes the code instructions to cause the communication device 1500 to perform the method described in the above method embodiments.

The communication device 1500 is a terminal device: the processor 1501 is used to execute step 501 in Fig. 5; steps 601 and 602 in Fig. 6; steps 701 and 702 in Fig. 7; steps 801, 802 and 803 in Fig. 8; step 902 in Fig.9.

The communication device 1500 is a network device: the transceiver 1501 is used to execute step 1001 in Fig. 10; step 1101 in Fig. 11; steps 1201 and 1202 in Fig. 12.

In one implementation, the processor 1501 may include a transceiver for implementing receiving and transmitting functions. For example, the transceiver can be a transceiver circuit, or an interface, or an interface circuit. The transceiver circuit, interface, or interface circuit used to implement the receiving and sending functions can be separate or integrated together. The above-mentioned transceiver circuit, interface or interface circuit can be used for reading and writing code/data, or the above-mentioned transceiver circuit, interface or interface circuit can be used for signal transmission or transfer.

In one implementation, the processor 1501 may store a computer program 1503 that runs on the processor 1501 and enables the communication device 1500 to perform the method described in the above method embodiments. The computer program 1503 may be fixed in the processor 1501, in which case the processor may be implemented by hardware.

In one implementation, the communication device 1500 may include a circuit that can perform the functions of sending, receiving, or communicating as described in the aforementioned method embodiments. The processor and transceiver described in this disclosure can be implemented on integrated circuits (ICs), analog ICs, radio frequency integrated circuits (RFICs), mixed signal ICs, application specific integrated circuits (ASICs), printed circuit boards (PCBs), electronic devices, etc. The processor and transceiver can also be manufactured using various IC process technologies, such as complementary metal oxide semiconductor (CMOS), n-type metal oxide semiconductor (NMOS), positive channel metal oxide semiconductor (PMOS), bipolar junction transistor (BJT), bipolar CMOS, silicon germanium (SiGe), gallium arsenide (GaAs), etc.

The communication device described in the above embodiments may be a network device or a terminal device, but the scope of the communication device described in this disclosure is not limited to this, and the structure of the communication device may not be limited by Fig. 15. The communication device may be a standalone device or a part of a larger device. For example, the communication device may be:
(1) Independent integrated circuit IC, or chip, or chip system or subsystem;
(2) A set of one or more ICs, optionally including storage components for storing data and computer programs;
(3) ASIC, such as modems;
(4) Modules that can be embedded in other devices;
(5) Receiver, terminal device, intelligent terminal device, cellular phone, wireless device, handheld device, mobile unit, vehicle mounted device, network device, cloud device, artificial intelligence device, etc;
(6) Others and so on.

For the communication device that can be a chip or chip system, reference can be made to the schematic diagram of the structure of the chip shown in Fig. 16. The chip shown in Fig. 16 includes processors 1601 and interfaces 1602. The number of processors 1601 can be one or more, and the number of interfaces 1602 can be multiple.

Optionally, the chip also includes a memory 1603 for storing necessary computer programs and data.

Technicians in this field can also understand that various illustrative logical blocks and steps listed in the embodiments of the present disclosure can be implemented through electronic hardware, computer software, or a combination of both. Whether such functionality is implemented through hardware or software depends on the specific application and the design requirements of the entire system. Technicians in this field can use various methods to implement the described functions for each specific application, but such implementation should not be understood as exceeding the scope of protection of the disclosed embodiments.

The present disclosure also provides a readable storage medium storing instructions that, when executed by a computer, implement the functions of any of the method embodiments described above.

The present disclosure also provides a computer program product that, when executed by a computer, implements the functions of any of the method embodiments described above.

In the above embodiments, it can be fully or partially implemented through software, hardware, firmware, or any combination thereof. When implemented using software, it can be fully or partially implemented in the form of a computer program product. The computer program product includes one or more computer programs. When loading and executing the computer program on a computer, all or part of the process or function described in embodiments of the present disclosure is generated. The computer may be a general-purpose computer, a specialized computer, a computer network, or other programmable device. The computer program can be stored in a computer-readable storage medium or transmitted from one computer-readable storage medium to another. For example, the computer program can be transmitted from a website site, computer, server, or data center to another website site, computer, server, or data center via wired (such as coaxial cable, fiber optic, digital subscriber line (DSL)) or wireless (such as infrared, wireless, microwave, etc.) means. The computer-readable storage medium can be any available medium that a computer can access, or a data storage device such as a server or data center that integrates one or more available media. The available media can be magnetic media (such as floppy disks, hard disks, magnetic tapes), optical media (such as high-density digital video discs (DVDs)), or semiconductor media (such as solid state disks (SSDs)).

Those skilled in the art can understand that the first, second, and other numerical numbers mentioned in this disclosure are only for the convenience of description and are not intended to limit the scope of the disclosed embodiments, but also indicate the order of occurrence.

"At least one" in the present disclosure can also be described as one or more, and "multiple" \can be two, three, four, or more, without limitation in this disclosure. **In** embodiments of the present disclosure, for a type of technical feature, the technical features in the type of technical feature are distinguished by "first", "second", "third", "A", "B", "C", and "D", etc. The technical features described by "first", "second", "third", "A", "B", "C", and "D" have no order of priority or size.

The correspondence relationships shown in each table in this disclosure can be configured or predefined. The values of the information in each table are only examples and can be configured as other values, which are not limited by this disclosure. When configuring the correspondence between information and various parameters, it is not necessarily required to configure all the correspondence relationships shown in each table. For example, in the table disclosed herein, the correspondence relationships shown in certain rows may not be configured. For another example, appropriate deformation adjustments can be made based on the above table, such as splitting, merging, and so on. The titles in the above tables indicate that the names of the parameters can also be other names that the communication device can understand, and the values or representations of the parameters can also be other values or representations that the communication device can understand. The above tables can also be implemented using other data structures, such as arrays, queues, containers, stacks, linear tables, pointers, linked lists, trees, graphs, structures, classes, heaps, hash tables, etc.

The predefined in this disclosure can be understood as defined, defined in adventure, stored, pre-stored, pre-negotiated, pre-configured, solidified, or pre-fired.

Those skilled in the art will recognize that the units and algorithm steps described in the embodiments of the present disclosure can be implemented using electronic hardware, or a combination of computer software and electronic hardware. Whether these functions are executed in hardware or software depends on the specific application and design constraints of the technical solution. Professional technicians can use different methods to achieve the described functionality for each specific application, but such implementation should not be considered beyond the scope of this disclosure.

Technicians in the relevant field can clearly understand that, for the convenience and conciseness of description, the specific working process of the system, device, and unit described above can refer to the corresponding process in the aforementioned method embodiments, which will not be repeated here.

The above is only a specific implementation of the present disclosure, but the scope of protection of the present disclosure is not limited to this. Any skilled person familiar with the technical field can easily think of changes or replacements within the technical scope disclosed in the present disclosure, which should be included in the scope of protection of the present disclosure. Therefore, the scope of protection of this disclosure should be based on the scope of protection of the claims.

## Claims

1. A failure recovery method, applied in a terminal device, the method comprising:
performing failure recovery based on configuration information for mobility in response to occurrence of a failure.

2. The method of claim 1, wherein the configuration information for mobility comprises at least one of: configuration information for selective activation of cell groups, or configuration information for conditional mobility management.

3. The method of claim 1, wherein performing failure recovery based on the configuration information for mobility comprises executing a mobility process and/or applying configuration of a target cell group corresponding to the mobility process.

4. The method of claim 1 or 2, wherein performing failure recovery based on the configuration information for mobility in response to the occurrence of the failure comprises:
in response to the occurrence of the failure, selecting configuration of a target cell group from the configuration information for mobility; and
performing failure recovery based on the configuration of the target cell group.

5. The method of claim 4, wherein selecting the configuration of the target cell group from the configuration information for mobility in response to the occurrence of the failure, comprises:
in response to the occurrence of the failure, selecting the target cell group from candidate cell groups corresponding to the configuration information for mobility; or, selecting a target cell from cells corresponding to the candidate cell groups, and determining a cell group to which the target cell belongs as the target cell group; and
obtaining the configuration of the target cell group from the configuration information for mobility.

6. The method of claim 4, wherein selecting the configuration of the target cell group from the configuration information for mobility in response to the occurrence of the failure, comprises:
in response to the occurrence of the failure, selecting the configuration of the target cell group from the configuration information for mobility based on a selection strategy.

7. The method of claim 6, wherein in response to the occurrence of the failure, selecting the configuration of the target cell group from the configuration information for mobility based on a selection strategy configured by a network device, comprises:
in response to the occurrence of the failure, starting a selection timer, and selecting configuration of a candidate cell group from the configuration information for mobility based on a preconfigured selection strategy;
determining selected configuration of the candidate cell group as the configuration of the target cell group in a case that the selection timer does not expire.

8. The method of claim 6, wherein the selection strategy comprises at least one of following strategies:
selecting based on a triggering condition corresponding to a candidate cell group in the configuration information for mobility, selecting based on a measurement result of a candidate cell group in the configuration information for mobility, selecting based on pre-configuration of a network device, selecting based on a protocol specification, and selecting based on implementation of the terminal device.

9. The method of claim 1 or 2, wherein performing failure recovery based on the configuration information for mobility in response to the occurrence of the failure, comprises:
in response to the occurrence of the failure, selecting a cell for reestablishment;
in response to the cell for reestablishment being a cell in one or more candidate cell groups corresponding to the configuration information for mobility, determining a candidate cell group to which the cell for reestablishment belongs as a target cell group; and
performing cell group failure recovery based on configuration of the target cell group.

10. The method of claim 1 or 2, further comprising:
receiving indication information from a network device, wherein the indication information is used to indicate that the terminal device is allowed to perform failure recovery based on the configuration information for mobility.

11. The method of claim 10, wherein the indication information is first indication information, wherein the first indication information is used to indicate that the terminal device is allowed to select configuration of a target cell group from the configuration information for mobility; or,
wherein the indication information is second indication information, wherein the second indication information is used to indicate that the terminal device is allowed to determine a candidate cell group to which a cell for reestablishment as a target cell group and perform cell group failure recovery based on configuration of the target cell group in a case that the cell for reestablishment is a cell in one or more candidate cell groups corresponding to the configuration information for mobility.

12. The method of claim 1, wherein before performing failure recovery based on the configuration information for mobility in response to the occurrence of the failure, the method further comprises:
determining the occurrence of the failure in response to occurrence of at least one of following failures:
master cell group synchronization reconfiguration failure, master cell group radio link failure, secondary cell group synchronization reconfiguration failure, and secondary cell group radio link failure.

13. The method of claim 1, further comprising:
in response to occurrence of a failure in a master cell group or occurrence of a failure in master cell group failure recovery, entering an idle state, or falling back to configuration of a source master cell group, or triggering a reestablishment process; or,
in response to occurrence of a failure in a secondary cell group or occurrence of a failure in secondary cell group failure recovery, releasing the secondary cell group, or falling back to configuration of a source secondary cell group, or triggering a reestablishment process.

14. A failure recovery method, applied in a network device, the method comprising:
sending configuration information for mobility to a terminal device, wherein a failure recovery process of the terminal device is based on the configuration information for mobility.

15. The method of claim 14, wherein the configuration information for mobility comprises at least one of: configuration information for selective activation of cell groups, or configuration information for conditional mobility management.

16. The method of claim 14, further comprising:
configuring a selection strategy for the terminal device, for indicating the terminal device to select configuration of a target cell group from the configuration information for mobility for failure recovery.

17. The method of claim 16, wherein the selection strategy comprises at least one of following strategies: selecting based on a triggering condition corresponding to a candidate cell group in the configuration information for mobility, selecting based on a measurement result of a candidate cell group in the configuration information for mobility, and selecting based on pre-configuration of the network device.

18. The method of claim 16, further comprising:
configuring a selection timer for the terminal device, for indicating the terminal device to select the configuration of the target cell group in a case that the selection timer does not expire.

19. The method of claim 14, wherein
the configuration information for mobility comprises: configuration of candidate master cell groups, and/or configuration of candidate secondary cell groups;
wherein there is no association relationship between the candidate master cell group and the candidate secondary cell group, or there is an association relationship between the candidate master cell group and the candidate secondary cell group.

20. The method of claim 14, further comprising:
sending indication information to the terminal device, wherein the indication information is used to indicate that the terminal device is allowed to perform failure recovery based on the configuration information for mobility.

21. The method of claim 20, wherein
the indication information is first indication information, wherein the first indication information is used to indicate that the terminal device is allowed to select configuration of a target cell group from the configuration information for mobility; or,
the indication information is second indication information, wherein the second indication information is used to indicate that the terminal device is allowed to determine a candidate cell group to which a cell for reestablishment as a target cell group and perform cell group failure recovery based on configuration of the target cell group in a case that the cell for reestablishment is a cell in one or more candidate cell groups corresponding to the configuration information for mobility.

22. A failure recovery apparatus, applied in a terminal device, the apparatus comprising:
a processing unit, configured to perform failure recovery based on configuration information for mobility in response to occurrence of a failure.

23. A failure recovery apparatus, applied in a network device, the apparatus comprising:
a transceiver unit, configured to send configuration information for mobility to a terminal device, wherein a failure recovery process of the terminal device is based on the configuration information for mobility.

24. A communication device, comprising a processor and a memory, wherein the memory is stored with a computer program, and the processor is configured to execute the computer program stored in the memory, to cause the device to implement the method of any of claims 1-13.

25. A communication device, comprising a processor and a memory, wherein the memory is stored with a computer program, and the processor is configured to execute the computer program stored in the memory, to cause the device to implement the method of any of claims 14-21.

26. A communication device, comprising a processor and an interface circuit, wherein
the interface circuit is configured to receive code instructions and send the code instructions to the processor;
the processor is configured to run the code instructions to implement the method of any of claims 1-13.

27. A communication device, comprising a processor and an interface circuit, wherein
the interface circuit is configured to receive code instructions and send the code instructions to the processor;
the processor is configured to run the code instructions to implement the method of any of claims 14-21.

28. A computer readable storage medium, stored with instructions which, when executed, cause the method of any of claims 1-13 to be implemented.

29. A computer readable storage medium, stored with instructions which, when executed, cause the method of any of claims 14-21 to be implemented.
